# EUROPEAN PATENT APPLICATION

(11) **EP 2 499 942 A1**
(43) Date of publication of application: **19.09.2012**
(21) Application number: 11158708.5
(22) Date of filing: 17.03.2011
(51) Int. Cl.: A47G 21/16

(54) **Adjustable table clip**

(71) Applicant: Al-Basri, Akeel, Prestwich Manchester Greater Manchester M25 0AD (GB)
(72) Inventor: Al-Basri, Akeel, Prestwich Manchester Greater Manchester M25 0AD (GB)

(57) **Abstract**

The Adjustable Table Clip is specifically designed for clipping tablecloths on table tops of different thicknesses. The Adjustable table clip assembly comprises two parts; the top jaw (1) and lower jaw (2). The top jaw (1) is an L shaped part functioning as a jaw to meet the lower jaw (2) part and the top jaw part (1) consists of tracks (8) on the sides to host the lower jaw part (2) and has a chamfered steps (3) designed to trap the lower jaw part (2) in a fixed position. The lower jaw part (2) consists of 4 extensions; the jaw gripper extension (4), the lever extension (5), the wedge extension (6) and the sliding skate extension (7). The lower jaw part (2) is designed to slide through the sliding skate section (7). The skate section (7) has a further wing extension to secure the sliding skate (7) to the top jaw part (1) and when the user pushes the lower jaw part (2) upwards through the track end the lower jaw part (2) will slide through with some friction on the chamfered steps (3). As every chamfered step (3) is passed the wedge extension (6) will prevent the lower jaw part (2) from sliding downward as the wedge extension (6) will be trapped against the lower chamfered step (3). This functionality will secure the lower jaw part (2) in one position when it is gripping the table top. If the user needs to slide the lower jaw part (2) downward to a different position, the lever extension (5) needs to be pushed towards the jaw gripper extension (4).

## Description

### Background;

This invention relates to a new device designed specifically for clipping table cloths to different thicknesses of table tops. The device is an Adjustable Table Clip and the user can adjust it to accommodate the table thickness.

### Statement of invention;

The adjustable Table Clip invention is to give the user the ability to adjust the table clip to a different size jaw, to accommodate for the thickness of the table top it is being clipped to. The invention and advantage of this device is to give a tight grip on the table top for any width of jaw. The other side of the invention is the methodology and mechanism of the adjustment of the jaw size and the secure locking of the jaw.

### Advantages;

The Adjustable Table Clip invention is to solve the problem of having a variety of different table clips to be clipped on table tops of different thicknesses. The Adjustable Table Clip can be used for most table top thicknesses. The advantages of the Adjustable Table Clip is to give a tight grip on the table top for any jaw width where the tightness of the grip is consistent whatever the size of the table top thickness and suitable for table skirting attachments by sticking Velcro on the table clip and for other uses of clipping tablecloths on a variety of table top thicknesses.

### Introduction to Drawings;

The description of the inventive Adjustable Table Clip is illustrated in the drawings attached.

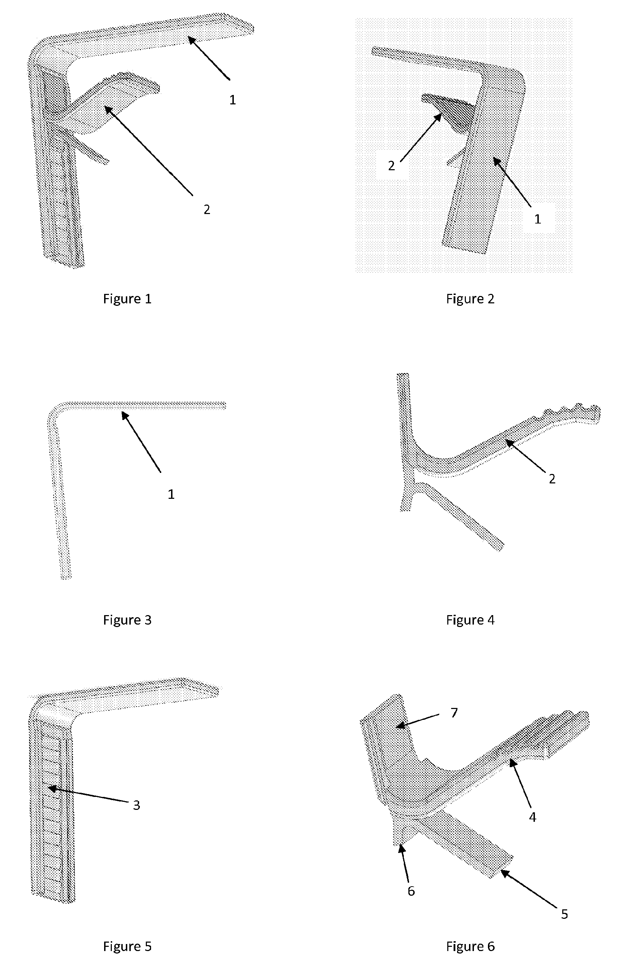

Figure 1: Shows the Adjustable Table Clip from inside angle, the device is consisting of the top jaw part (1), and lower jaw part (2).
Figure 2: Shows the Adjustable Table Clip from outside position, the device is consisting of the top jaw part (1), and lower jaw part (2).
Figure 3: Shows a side view of the top jaw part.
Figure 4: Shows a side view of the lower jaw part.
Figure 5: Shows the isometric position for the top jaw part, consisting of the chamfered steps (3).
Figure 6: Shows the isometric position for the lower jaw part, consisting of the jaw gripper extension (4), the lever extension (5), the wedge extension (6), sliding skate extension (7).

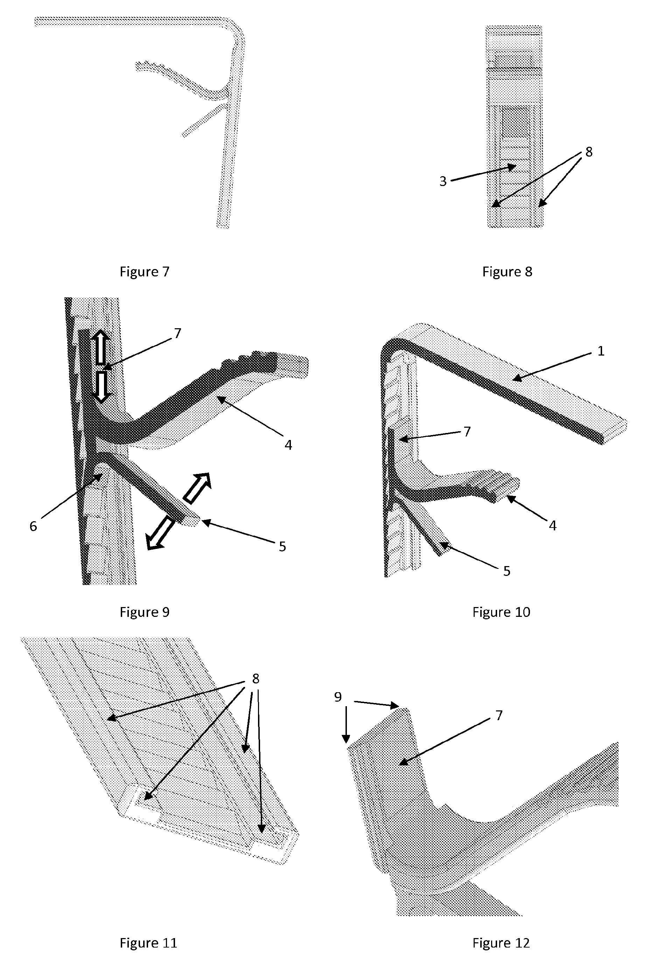

Figure 7: Shows the Adjustable Table Clip from side view.
Figure 8: Shows the Adjustable Table Clip front view, showing the tracks (8), the chamfered steps (3)
Figure 9: Shows the Adjustable Table Clip on a cross cut section, illustrating the functionality of the adjustment technique for enlarging the table clip jaw. The figure shows a cross section of the lower jaw part consisting of the lever extension (5), the wedge extension (6), the jaw gripper extension (4) and the sliding skate extension (7).
Figure 10: Shows the Adjustable Table Clip on a cross cut section, illustrating the functionality of the adjustment technique for enlarging the table clip jaw. The figure shows a cross section of the lower jaw part consisting of the lever extension (5), the wedge extension (6), the jaw gripper extension (4), the sliding skate extension (7) and the top jaw (1).
Figure 11: Shows the top jaw part with enlargement of the tracks (8).
Figure 12: Shows the lower jaw part with the sliding skate extension (7) and the sliding skate wings (9).

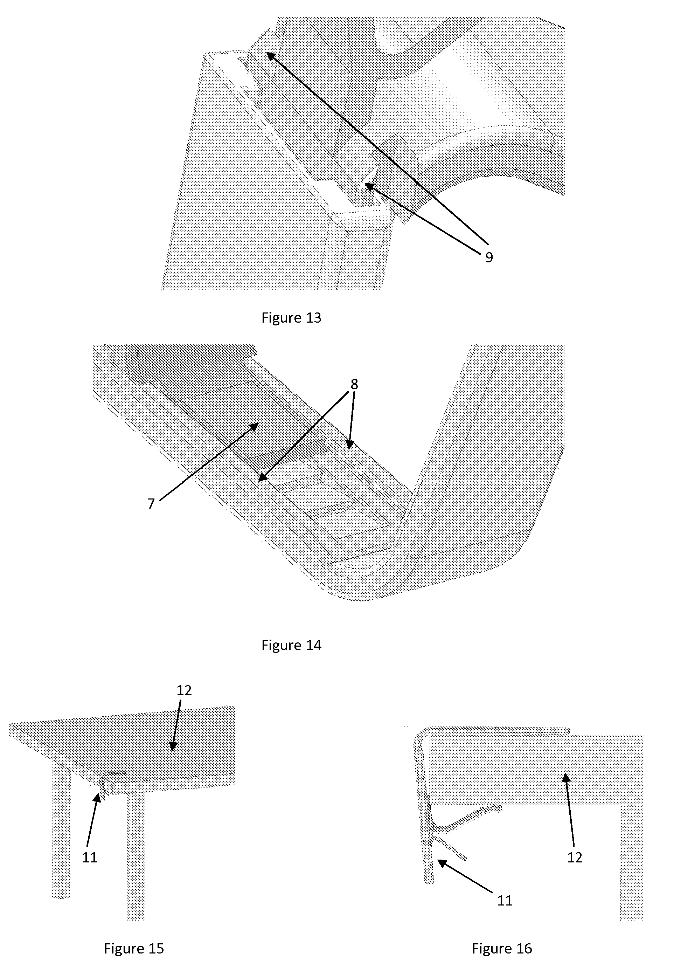

Figure 13: Shows the sliding skate wings (9).
Figure 14: Shows the sliding skate (7), and the tracks (8).
Figure 15: Shows an isometric view of the Table Adjustable Table Clip (11), in a clipping position on the table top (12).
Figure 16: Shows a side view of the Table Adjustable Table Clip (11), in a clipping position on the table top (12).

### Description;

The Adjustable Table Clip is specifically designed for clipping tablecloths on table tops of different thicknesses. The Adjustable table clip assembly comprises two parts; the top jaw and lower jaw. The top jaw is an L shaped part functioning as a jaw to meet the lower jaw part and the top jaw part consists of tracks on the sides to host the lower jaw part and has a chamfered steps designed to trap the lower jaw part in a fixed position. The lower jaw part consists of 4 extensions; the jaw gripper extension, the lever extension, the wedge extension and the sliding skate extension. The lower jaw part is designed to slide through the sliding skate section. The skate section has a further wing extension to secure the sliding skate to the top jaw part and when the user pushes the lower jaw part upwards through the track end the lower jaw part will slide through with some friction on the chamfered steps. As every chamfered step is passed the wedge extension will prevent the lower jaw part from sliding downward as the wedge extension will be trapped against the lower chamfered step. This functionality will secure the lower jaw part in one position when it is gripping the table top. If the user needs to slide the lower jaw part downward to a different position, the lever extension needs to be pushed towards the jaw gripper extension. This action will result in bending the wedge extension away from the chamfered step and will be released from the trapped position. By keeping the pressure applied on the lever extension the user can continue moving the lower jaw part downward to any desired position required and in order to lock this desired position the user needs to release the lever extension resulting in the wedge extension movement against the lower chamfered step securing the position of the lower jaw part. The user can slide the lower jaw part completely out of the top jaw part if needed. When the user selects a suitable position for clipping a table top, the Adjustable Table Clip can be slid onto the edge of the table. The pressure of the gripping from the top and lower jaw parts will create further security on the wedge extension which will be forced and trapped further between the chamfered steps preventing the lower jaw part from sliding downward.

## Claims

1. A table clip assembly of skating, wedging and trapping adjustability, comprising two parts, the first part being an L-shaped upper jaw of chamfered steps formation with side tracks, the second part being a lower jaw hosted by the upper jaw by means of the tracks which allow it to slide, the lower jaw having a wedge extension to trap it against the chamfered steps of the upper jaw preventing its sliding, the wedge extension being controlled by a lever extension to allow movement of the wedge extension away from the chamfered steps so as to be free to slide, the chamfered steps mechanism being able to be of a reverse functionality where the top jaw part consists of the sliding skate, and the lower jaw part consists of chamfered steps.

2. The Adjustable table clip assembly as claimed in claim 1, wherein the chamfered steps mechanism can be on the side of the top jaw part, or the back.

3. The Adjustable table clip assembly as claimed in any preceding claim wherein the assembly is made from plastic material.

## Amended claims

### Amended claims in accordance with Rule 137(2) EPC.

**1.** An adjustable table clip assembly comprising first (1) and second (2) jaws adapted for relative movement, the first jaw part comprising an L-shaped upper portion (1) and the lower jaw part (2) being configured to be vertically adjustable in use relative to the upper jaw part, one of the jaw parts being provided with tracks/channels and chamfered steps (3) and the other jaw part being profiled to be mounted within the tracks or channels (7) and having a wedge extension (6) that engages with the chamfered steps (3) and which is moved out of engagement with the chamfered steps by a lever extension (5).

**2.** An adjustable clip assembly according to claim 1 where the tracks/channels and chamfered steps (3) are provided on the upper jaw part (1) and the wedge extension (6) and lever extension (5) are provided on the lower jaw part (2).

**3.** An adjustable clip assembly according to claim 1 and 2 where chamfered steps (3) are provided on the back or sides of the upper jaw part (1).
